# EUROPEAN PATENT APPLICATION

(11) **EP 4 717 229 A1**
(43) Date of publication of application: **01.04.2026**
(21) Application number: 24811297.1
(22) Date of filing: 29.04.2024
(51) Int. Cl.: A61C 19/02, A61C 8/00, B65D 81/32, B65D 85/00, B65D 25/10

(54) **DENTAL IMPLANT PACKAGING AMPOULE**

(30) Priority: 23.05.2023 KR 20230066113
(71) Applicant: Osstem Implant Co., Ltd., Gangseo-gu Seoul 07789 (KR)
(72) Inventor: LEE, Chan Jung, Seoul 07593 (KR); CHO, Sang Kyung, Gimpo-si, Gyeonggi-do 10066 (KR); YU, Woo Sang, Seoul 07788 (KR)
(74) Representative: Germain Maureau
(86) International application number: PCT/KR2024/005807
(87) International publication number: WO 2024/242358

(57) **Abstract**

An embodiment of the present invention provides a dental implant packaging ampoule including: an inner container for storing an implant; an outer container for storing the inner container; a cap assembly for sealing the outer container; a guide member that is provided on an inner circumferential portion of the inner container and prevents the implant from disengaging in a horizontal direction; and a support member that is provided on the inner circumferential portion of the inner container and supports the lower end of the implant. The inner circumferential portion of the inner container is provided with a first stepped portion, to which the guide member is coupled, and a second stepped portion, to which the support member is coupled, wherein the first stepped portion and the second stepped portion are integrated with the inner container.

## Description

### [Technical Field]

The present invention relates to a dental implant packaging ampoule.

### [Background Art]

An implant is a replacement that restores human tissue when the human tissue has been lost, but in dentistry, an implant refers to an artificial tooth root. Dental implant surgery is a dental procedure in which a dental implant made of titanium or the like, which is not rejected by the human body, is placed into the alveolar bone where a tooth has fallen out to replace the root of a lost tooth and fused to the alveolar bone, and then an abutment and a prosthesis are fixed to the dental implant.

Since implants like this are components that are inserted into human tissue, the implants need to be maintained in a sterile state. Therefore, preventing contamination or damage during packaging, transportation, and opening of the packaging has become the most important task.

Accordingly, in the case of a packaging ampoule for storing an implant, since the implant is directly implanted into the alveolar bone, the packaging ampoule needs to be configured so that a series of processes can be easily performed when opening the packaging ampoule and taking out the implant.

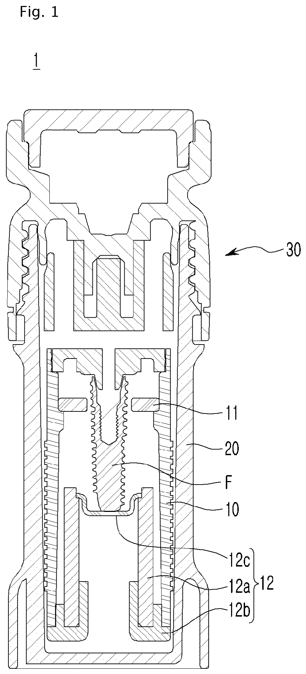

FIG. 1 shows a dental implant packaging ampoule according to the related art. As shown in FIG. 1, a conventional packaging ampoule 1 is configured to include an inner container 10 in which an implant F is stored, an outer container 20 in which the inner container 10 is stored, and a cap portion 30 that seals the outer container 20. In this case, as a structure for fixing the implant F in the packaging ampoule 1, the packaging ampoule 1 includes a position fixing unit 11 that is coupled to an inner circumference of the inner container 10 to prevent the separation of the implant F in a horizontal direction, and a support portion 12 that makes contact with a lower end of the implant F to provide substantial support, wherein the support portion 12 includes an extension portion 12a that extends from a lower end of the inner container 10 to have a predetermined height, a base 12b for fixedly supporting a lower end of the extension portion 12a, and a support piece 12c that is installed on an upper end of the extension portion 12a to support the lower end of the implant F. That is, as described above, the conventional packaging ampoule 1 had a problem in that the number of parts constituting the packaging ampoule was large and the structure was complex, resulting in reduced production efficiency and increased unit cost.

### Related Art Document

Korean Registration Patent Publication No. 10-1439344 (September 2, 2014)

### [Disclosure]

### [Technical Problem]

The present invention is intended to solve the problems of the related art described above, and an object of the present invention is to provide a dental implant packaging ampoule capable of improving the production efficiency of a product and reducing the production cost by simplifying a structure for fixing an implant.

### [Technical Solution]

In order to achieve the above object, one aspect of the present invention provides a dental implant packaging ampoule including: an inner container in which an implant is stored; an outer container in which the inner container is stored; a cap assembly that seals the outer container; a guide member provided at an inner circumference of the inner container to prevent separation of the implant in a horizontal direction; and a support member provided on the inner circumference of the inner container to support a lower end of the implant, wherein the inner circumference of the inner container is provided with a first step portion to which the guide member is coupled, and a second step portion to which the support member is coupled, and the first step portion and the second step portion are formed integrally with the inner container.

In one embodiment of the present invention, an inner diameter D1 of the first step portion may be greater than an inner diameter D2 of the second step portion.

In one embodiment of the present invention, the support member may include: a support portion supporting the lower end of the implant; and a seating portion formed along an upper perimeter of the support portion and seated on and coupled to the second step portion of the inner container.

In one embodiment of the present invention, the seating portion of the support member may be formed at least partially in an angular shape to prevent rotation while seated on the second step portion.

In one embodiment of the present invention, one or more inner protrusions may be formed on the inner circumference of the inner container to prevent upward separation of the support member seated on the second step portion.

In one embodiment of the present invention, one or more anti-separation protrusions may be formed on the second step portion to prevent the support member from being separated, and one or more anti-separation grooves into which the anti-separation protrusions are inserted may be formed in the seating portion of the support member.

In one embodiment of the present invention, one or more anti-separation grooves may be formed in the second step portion to prevent the support member from being separated, and one or more anti-separation protrusions that are inserted into the anti-separation grooves may be formed on the seating portion of the support member.

In one embodiment of the present invention, the cap assembly may include: an ampoule cap that seals the outer container; an inner cap provided on a lower side of the ampoule cap and connected to the inner container; and a cover cap provided on an upper side of the ampoule cap and used to distinguish a diameter or height of the implant to be stored.

In one embodiment of the present invention, a connecting protrusion connected to an upper end of the implant may be provided at a center of the inner cap.

In one embodiment of the present invention, a lower end of the inner container may be directly supported on a bottom of the outer container.

### [Advantageous Effects]

According to one aspect of the present invention, since a dental implant packaging ampoule has a first step portion and a second step portion, to which a guide member and a support member can be coupled, integrally formed with an inner container at an inner circumference of the inner container, the number of components constituting the dental implant packaging ampoule can be reduced, thereby simplifying the structure, improving production efficiency, and reducing manufacturing costs.

In addition, since the dental implant packaging ampoule has a double storage structure, contamination of an implant by external foreign substances can be easily prevented. Furthermore, since a cap assembly is connected to and located on upper portions of an inner container and an outer container, the implant can be taken out and used with a simple operation without any separate complex operation during a series of use processes for taking out the implant.

The effects of the present invention are not limited to the effects described above, and should be understood to include all effects that can be inferred from the detailed description of the present invention or the configuration of the invention described in the claims.

### [Description of Drawings]

FIG. 1 shows a dental implant packaging ampoule according to the related art.
FIG. 2 is a perspective view of a dental implant packaging ampoule according to one embodiment of the present invention.
FIG. 3 is an exploded view showing a configuration of the dental implant packaging ampoule according to one embodiment of the present invention.
FIG. 4 is an exploded view showing in detail the configuration of the dental implant packaging ampoule according to one embodiment of the present invention.
FIG. 5 is a cross-sectional view along line A-A' in FIG. 2.
FIG. 6 is a cross-sectional view along line B-B' in FIG. 2.
FIG. 7 is an exploded perspective view of an inner container, a guide member, and a support member according to one embodiment of the present invention.
FIG. 8 is a cross-sectional view of the combination of the inner container, the guide member, and the support member according to one embodiment of the present invention.
FIGS. 9A and 9B are a perspective view and a perspective cross-sectional view, respectively, of the inner container according to one embodiment of the present invention.
FIGS. 10 and 11 are views sequentially showing a method of using the dental implant packaging ampoule according to one embodiment of the present invention.
FIG. 12 is an exploded perspective view of an inner container, a guide member, and a support member according to another embodiment of the present invention.
FIG. 13 is a cross-sectional view of the combination of the inner container, the guide member, and the support member according to another embodiment of the present invention.
FIGS. 14A and 14B are a perspective view and a perspective cross-sectional view, respectively, of the inner container according to another embodiment of the present invention.

### [Modes of the Invention]

Hereinafter, the present invention will be described with reference to the attached drawings. However, the present invention may be implemented in various different forms and is therefore not limited to the embodiments described herein. Further, in order to clearly describe the present invention in the drawings, portions unrelated to the description have been omitted, and similar portions are denoted by similar drawing reference numerals throughout the specification.

Throughout the specification, when a portion is described as being "connected" to another portion, this includes not only cases where the portion is "directly connected" to the other portion but also cases where the portion is "indirectly connected" to the other portion with another member disposed therebetween. Additionally, when a portion is described as "including" a component, this does not mean that the portion excludes another component, but rather that the portion may further include another component, unless otherwise specifically stated.

Hereinafter, embodiments of the present invention will be described in detail with reference to the attached drawings.

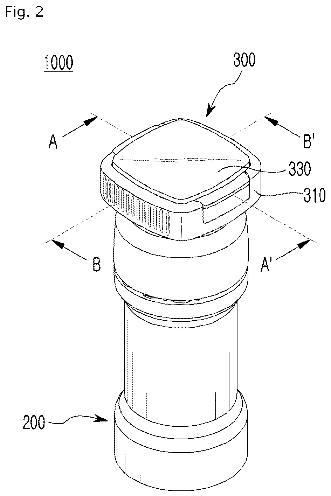

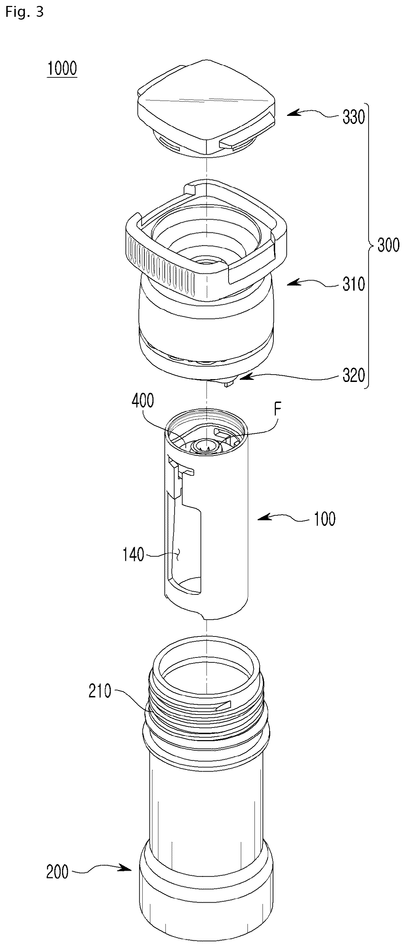

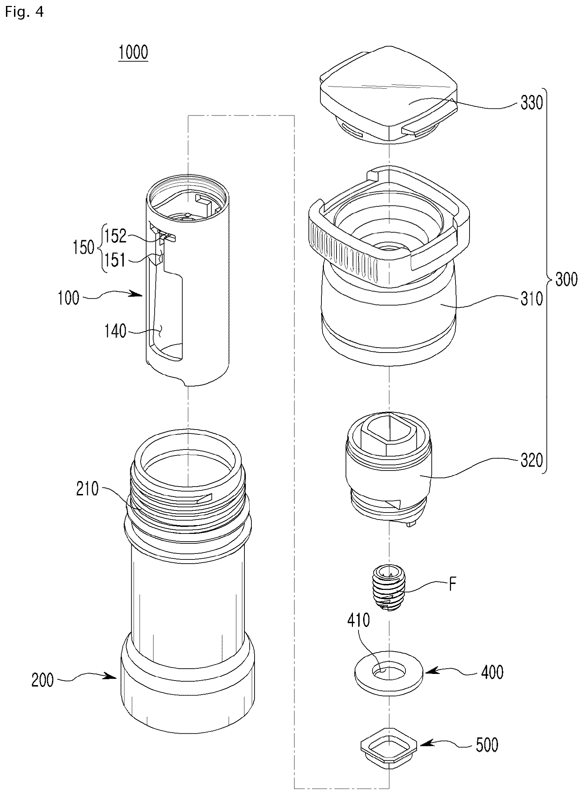

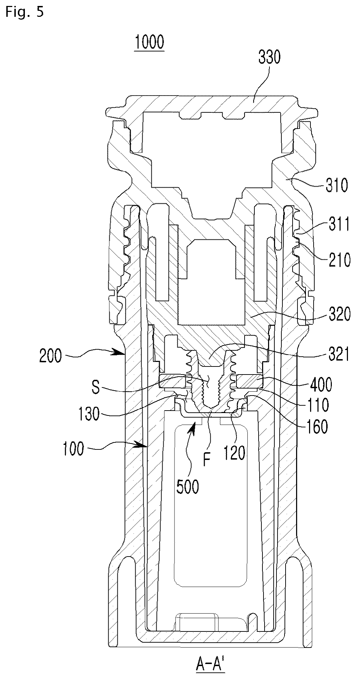

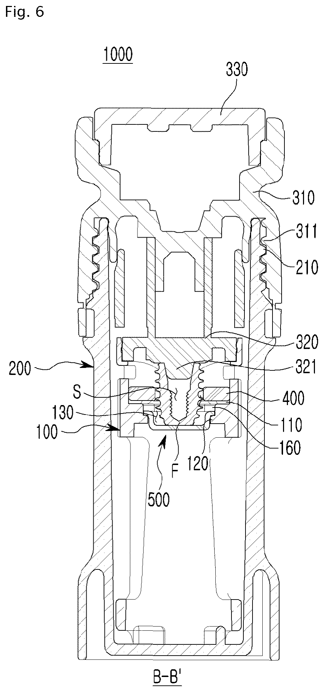

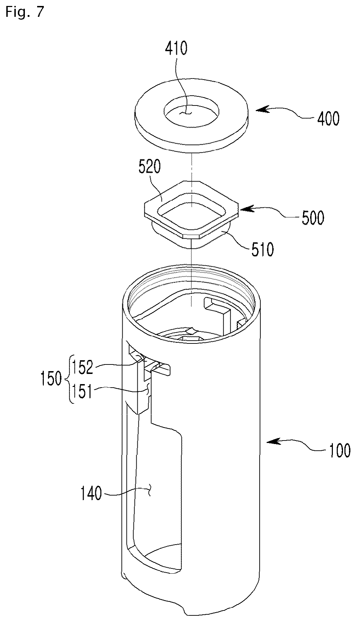

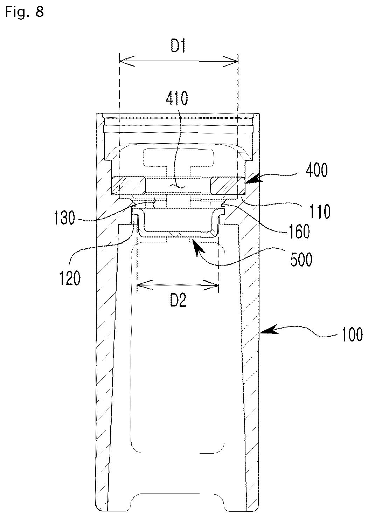

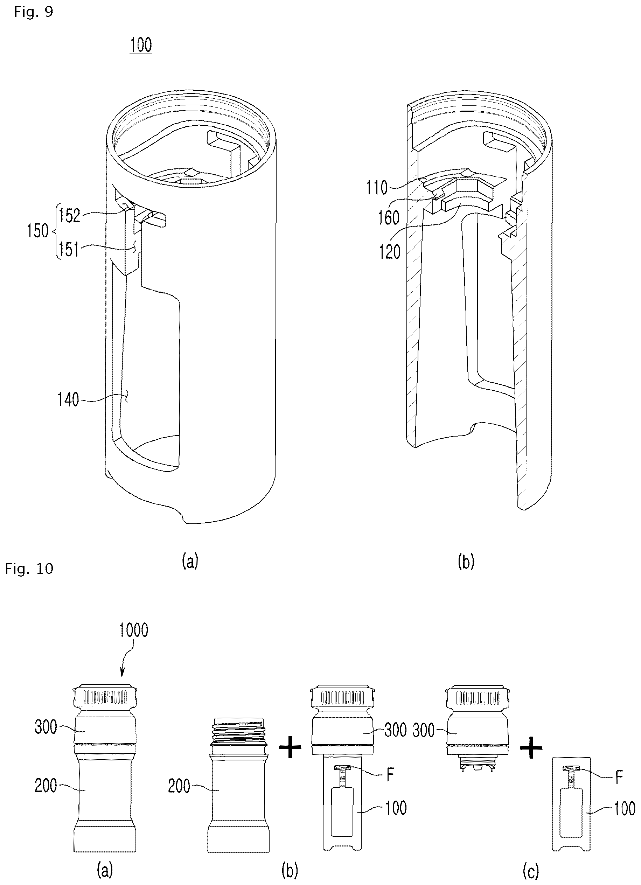

FIG. 2 is a perspective view of a dental implant packaging ampoule according to one embodiment of the present invention, FIG. 3 is an exploded view showing a configuration of the dental implant packaging ampoule according to one embodiment of the present invention, FIG. 4 is an exploded view showing in detail the configuration of the dental implant packaging ampoule according to one embodiment of the present invention, FIG. 5 is a cross-sectional view along line A-A' in FIG. 2, FIG. 6 is a cross-sectional view along line B-B' in FIG. 2, FIG. 7 is an exploded perspective view of an inner container, a guide member, and a support member according to one embodiment of the present invention, FIG. 8 is a cross-sectional view of the combination of the inner container, the guide member, and the support member according to one embodiment of the present invention, and FIGS. 9A and 9B are a perspective view and a perspective cross-sectional view, respectively, of the inner container according to one embodiment of the present invention.

Referring to FIGS. 2 to 9, a dental implant packaging ampoule 1000 according to the present invention may include an inner container 100, an outer container 200, a cap assembly 300, a guide member 400, and a support member 500.

More specifically, the dental implant packaging ampoule 1000 may include the inner container 100 in which an implant F is stored, the outer container 200 in which the inner container 100 is stored, the cap assembly 300 that seals the outer container 200, the guide member 400 provided at an inner circumference of the inner container 100 to prevent separation of the implant F in a horizontal direction, and the support member 500 provided at the inner circumference of the inner container 100 to support a lower end of the implant F, and the inner circumference of the inner container 100 is provided with a first step portion 110 to which the guide member 400 is coupled and a second step portion 120 to which the support member 500 is coupled, wherein the first step portion 110 and the second step portion 120 are formed integrally with the inner container 100.

The implant F may be composed of a predetermined structure that is inserted into the alveolar bone and supports an artificial tooth. Preferably, the implant F may extend in a vertical direction, may have an overall pillar shape, and may be made of a material that is harmless to the human body and easily fuses with bone tissue, such as titanium, but is not limited thereto. Therefore, any material having similar properties to the above may be used.

In addition, preferably, the implant F may have a structure similar to a screw shape for fixing so that the contact area with the surroundings increases, and may have a configuration in which an outer diameter expands or decreases in one direction. In addition, as will be described below, the implant F may be connected to a connecting protrusion 321 formed in an inner cap 320 of the cap assembly 300 by having a predetermined connecting groove S formed on an upper portion, may be connected to a handpiece to be taken out, and may also be connected to an artificial tooth.

The implant F may be stored in the inner container 100. The inner container 100 may preferably have a cylindrical structure, and a storage space 130 may be formed therein. The implant F may be stored in the storage space 130 of the inner container 100.

The inner container 100 may be stored in the outer container 200 while storing the implant F, and a lower end of the inner container 100 may be supported by the bottom of the outer container 200. Preferably, the outer container 200 may also have a cylindrical structure. That is, a double storage structure may be achieved as the implant F is stored in the inner container 100 and the inner container 100 is stored in the outer container 200.

Meanwhile, as shown in FIGS. 7 to 9, the inner circumference of the inner container 100 may be provided with the guide member 400 that prevents separation of the implant F in the horizontal direction and the support member 500 that supports the lower end of the implant F.

The guide member 400 may be formed in a ring shape that is provided on the inner circumference of the inner container 100 and reduces an inner diameter of the inner container 100, and the implant F may be disposed on an inner side of the guide member 400.

The support member 500 may be provided at the inner circumference of the inner container 100 and may support the lower end of the implant F. The support member 500 may be located below the guide member 400 on the inner circumference of the inner container 100.

Meanwhile, the support member 500 may include a support portion 510 that supports the lower end of the implant F, and a seating portion 520 that is formed along an upper perimeter of the support portion 510 and is seated on and coupled to the second step portion 120 of the inner container 100. The seating portion 520 of the support member 500 may be formed at least partially in an angular shape to prevent rotation while seated on the second step portion 120. By means of this support member 500, the implant F may be stored in the inner container 100 at a predetermined height and stored.

In this way, as the guide member 400 and the support member 500 are provided at the inner circumference of the inner container 100, when the implant F is to be taken out from the inner container 100 by connecting the implant F to the handpiece and used, the connection between the handpiece and the implant F may be easily achieved, and a user's use convenience may be improved. In other words, as the support member 500 is provided, the implant F may be prevented from sinking deep into the inner container 100, and as the guide member 400 is provided, the implant F may be prevented from tilting to one side so that the connection between the handpiece and the implant F may be easily achieved.

As shown in FIGS. 7 to 9, the inner circumference of the inner container 100 may be provided with the first step portion 110 to which the guide member 400 is coupled and the second step portion 120 to which the support member 500 is coupled, and the first step portion 110 and the second step portion 120 may be formed integrally with the inner container 100. According to one example, the inner container 100 provided with the first step portion 110 and the second step portion 120 may be manufactured by injection molding. In this case, a position of the second step portion 120 supporting the support member 500 may be formed at an appropriate position on the inner circumference of the inner container 100 depending on a height of the implant F to be stored.

Referring to FIG. 8, on the inner circumference of the inner container 100, the first step portion 110 may be located above the second step portion 120, and in this case, an inner diameter D1 of the first step portion 110 may be formed to be greater than an inner diameter D2 of the second step portion 120. That is, when the dental implant packaging ampoule 1000 is assembled, the support member 500 is inserted into the inner container 100 through an upper opening region of the inner container 100, and then is seated on and coupled to the second step portion 120, and subsequently the guide member 400 is inserted into the inner container 100 through the upper opening region of the inner container 100, and then is seated on and coupled to the first step portion 110.

Referring to FIGS. 7 and 9, one or more inner protrusions 160 may be formed on the inner circumference of the inner container 100 to prevent upward separation of the support member 500. The inner protrusion 160 may be located above an upper side of the second step portion 120 on the inner circumference of the inner container 100. That is, the seating portion 520 of the support member 500 may be inserted through a space between the second step portion 120 and the inner protrusion 160 and may be seated on the second step portion 120.

According to the coupling structure of the second step portion 120 of the inner container 100 and the support member 500, the support member 500 does not rotate even at a deep position in the inner container 100 and is prevented from being separated upward so that its coupling position with the second step portion 120 is maintained.

In this way, since the first step portion 110 and the second step portion 120 to which the guide member 400 and the support member 500 are combined are integrally formed at the inner circumference of the inner container 100, there are effects of reducing the number of parts constituting the dental implant packaging ampoule 1000, improving production efficiency, and reducing manufacturing costs.

Meanwhile, the inner container 100 may include an opening 140 through which the inside and outside of the inner container 100 communicate.

The opening 140 may be formed on at least one side of the inner container 100 and, for example, may be formed on both sides as shown in the drawings. By means of the opening 140, when the outer container 200 is filled with a predetermined liquid, the inner container 100 may also be filled with the liquid. In this case, the liquid may be a predetermined solution, such as a predetermined disinfectant solution that prevents contamination and protects the implant F, but is not limited thereto. Therefore, the inner container 100 may be filled with the solution simply by filling the outer container 200 with the solution, without the need to separately fill the inner container 100 and the outer container 200 with the solution.

Referring to FIGS. 7 and 9, the inner container 100 may further include a cut portion 150 connected to an upper side of the opening 140 so that the inside and outside of the inner container 100 communicate. The cut portion 150 may include a vertical cut portion 151 extending from an upper end of the opening 140 and a horizontal cut portion 152 extending from an upper end of the vertical cut portion 151.

The cut portion 150 may be formed on at least one side of the inner container 100 and, for example, may be formed on both sides as shown in the drawings. The cut portion 150 may be formed at a height at which the second step portion 120 and the inner protrusion 160 are located.

Accordingly, when the seating portion 520 of the support member 500 is inserted through the space between the second step portion 120 and the inner protrusion 160, a force that presses the inner circumference of the inner container 100 outward by the seating portion 520 of the support member 500 may be generated. In this case, the cut portion 150 may enable elastic deformation of the inner container 100, thereby facilitating coupling of the support member 500 and the inner container 100.

Referring to FIGS. 2 to 6, the cap assembly 300 may be disposed on an upper portion of the outer container 200. The cap assembly 300 may be provided to seal the outer container 200, and the cap assembly 300 and the outer container 200 are connected, for example, by a screw structure so that opening and sealing of the outer container 200 by the cap assembly 300 are achieved by rotating the cap assembly 300. For example, a male screw portion 210 may be formed on the upper portion of the outer container 200, and a female screw portion 311 may be formed on the cap assembly 300.

As the inner container 100 is stored in the outer container 200 and the implant F is stored in the inner container 100, the cap assembly 300 may be located above the inner container 100 and the implant F. In this case, the cap assembly 300 may not only be disposed on the upper portion of the outer container 200 to seal the outer container 200, but is also connected to the inner container 100 and the implant F so that the inner container 100 and the implant F are suspended and mounted on a lower portion of the cap assembly 300.

The cap assembly 300 may include an ampoule cap 310, the inner cap 320, and a cover cap 330.

More specifically, the cap assembly 300 may be configured to include the ampoule cap 310 that seals the outer container 200, the inner cap 320 provided on a lower side of the ampoule cap 310 and connected to the inner container 100, and the cover cap 330 provided on an upper side of the ampoule cap 310 and used to distinguish a diameter or height of the implant F to be stored.

The cap assembly 300 may be configured to be connected to the inner container 100 so that the inner container 100 is taken out of the outer container 200 when the cap assembly 300 and the outer container 200 are separated. That is, when the cap assembly 300 and the outer container 200 are separated and the outer container 200 is opened, the inner container 100 and the implant F stored in the inner container 100 may be configured to be taken out of the outer container 200 along the cap assembly 300 without remaining in the outer container 200. That is, as the inner container 100 is stored in the outer container 200 while remaining connected to the cap assembly 300, when the outer container 200 is opened and the cap assembly 300 is separated from the outer container 200, the inner container 100 stored in the outer container 200 may be taken out of the outer container 200 while remaining connected to the cap assembly 300.

The ampoule cap 310 may be connected to the outer container 200 and may be detachably connected so that the outer container 200 is sealed and opened. Preferably, the female screw portion 311 may be formed on an inner side of the ampoule cap 310, and the male screw portion 210 may be formed on an outer side of the upper portion of the outer container 200 so that sealing and opening of the outer container 200 are achieved by rotating the cap assembly 300 as described above.

The inner cap 320 may be disposed on the lower side of the ampoule cap 310 and may be configured to be connected to the implant F and the inner container 100.

The inner cap 320 may be connected to the inner container 100. In this case, the connection between the inner cap 320 and the inner container 100 may be made through a screw structure, such as the connection form between the outer container 200 and the cap assembly 300, but preferably, a connection that allows the cap assembly 300 to be separated from the inner container 100 by application of an appropriate external force is sufficient.

For example, unevenness having a predetermined shallow protrusion may be formed on an inner side of the inner container 100, and a predetermined unevenness corresponding to the unevenness may be formed on an inner circumference of the cap inner cap 320 so that a connection between the inner cap 320 and the inner container 100 is achieved. In this case, when the cap assembly 300 is to be separated from the inner container 100, separation between the inner container 100 and the cap assembly 300 may be achieved simply by holding the cap assembly 300 and the inner container 100 and pulling the cap assembly 300 and the inner container 100 in opposite directions or bending the cap assembly 300 and the inner container 100 at a predetermined angle, without any operation such as rotating the cap assembly 300. Meanwhile, separation between the cap assembly 300 and the implant F may also be achieved simultaneously with separation between the cap assembly 300 and the inner container 100.

Meanwhile, the connecting protrusion 321 connected to an upper end of the implant F may be provided at a lower center of the inner cap 320. That is, as described above, the connecting groove S may be formed on an upper portion of the implant F, and the connecting protrusion 321 corresponding to the connecting groove S may be provided at the lower center of the inner cap 320. As the connecting protrusion 321 of the inner cap 320 is inserted into the connecting groove S of the implant F, the implant F may be safely stored without shaking in the inner container 100.

Here, the connection between the connecting protrusion 321 and the connecting groove S is not a rigid connection, and a connection that is naturally released by separating the cap assembly 300 from the inner container 100 is sufficient.

The cover cap 330 may be provided on the upper side of the ampoule cap 310 and may be configured to distinguish the diameter or height of the implant F to be stored. That is, the cover cap 330 may be provided in various colors to distinguish the diameter or height of the implant F, thereby improving the user's convenience in working.

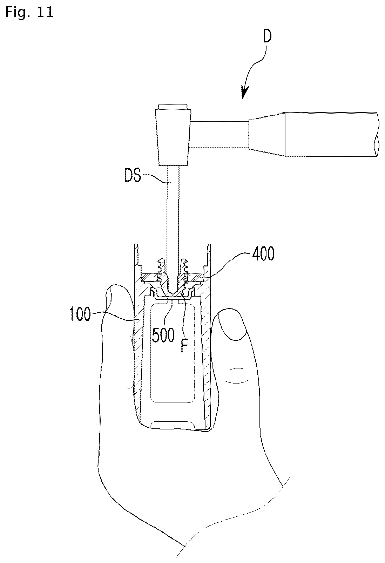

FIGS. 10 and 11 are views sequentially showing a method of using the dental implant packaging ampoule according to one embodiment of the present invention.

As shown in FIG. 10, when the dental implant packaging ampoule 1000 according to the present invention is opened and used, first (a) the dental implant packaging ampoule 1000 according to the present invention may be prepared, (b) the cap assembly 300 may then be separated from the outer container 200, and (c) the cap assembly 300 and the inner container 100 may be separated.

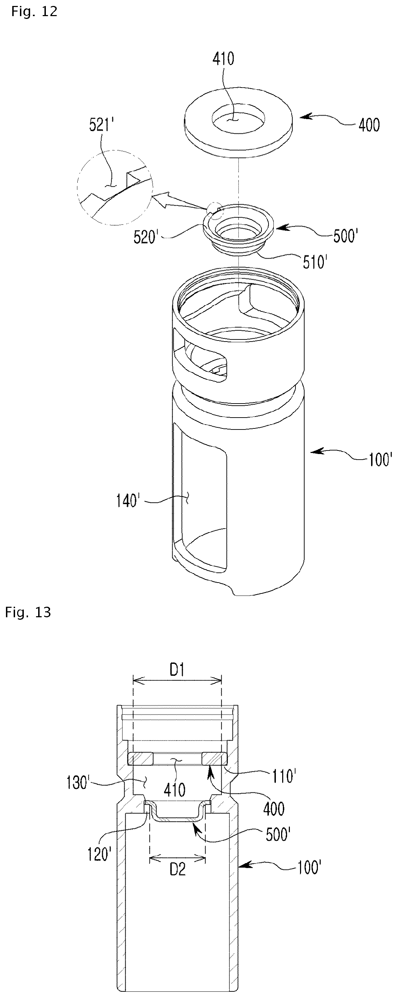

More specifically, first, a dental implant packaging ampoule 1000 according to the present invention may be prepared as in (a), and then (b) the outer container 200 may be held with one hand and the cap assembly 300 may be held with the other hand, and the outer container 200 and the cap assembly 300 may be separated. In this case, when the connection between the outer container 200 and the cap assembly 300 is a screw connection through a screw portion, separation between the outer container 200 and the cap assembly 300 may be achieved by turning the cap assembly 300 in a predetermined direction. Subsequently, when the cap assembly 300 is separated from the outer container 200, the inner container 100 coupled to the cap assembly 300 may be taken out and separated from the outer container 200 together with the cap assembly 300. Subsequently, (c) after the inner container 100 and the cap assembly 300 are held, the inner container 100 and the cap assembly 300 may be separated. In this case, the inner container 100 and the cap assembly 300 may be separated by appropriate manipulation, such as bending the inner container 100 and the cap assembly 300 or pulling the inner container 100 and the cap assembly 300 in opposite directions. Finally, as shown in FIG. 12, a shaft DS of a handpiece D may be connected to the connecting groove S of the implant F stored in the inner container 100, and then the implant F may be taken out of the inner container 100 and used.

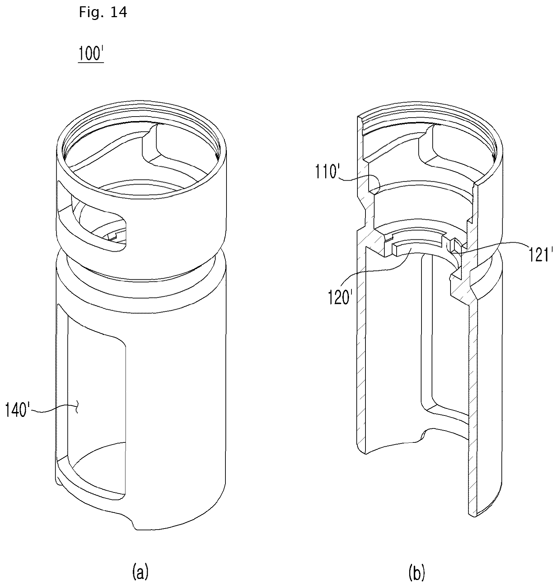

FIG. 12 is an exploded perspective view of an inner container, a guide member, and a support member according to another embodiment of the present invention, FIG. 13 is a cross-sectional view of the combination of the inner container, the guide member, and the support member according to another embodiment of the present invention, and FIGS. 14A and 14B are a perspective view and a perspective cross-sectional view, respectively, of the inner container according to another embodiment of the present invention.

Hereinafter, an inner container 100' and a support member 500' according to a second embodiment will be described with reference to FIGS. 12 to 14.

As shown in FIGS. 12 to 14, an inner circumference of the inner container 100' may be provided with a first step portion 110' to which a guide member 400 is coupled and a second step portion 120' to which the support member 500' is coupled, wherein the first step portion 110' and the second step portion 120' are formed integrally with the inner container 100'. According to one example, the inner container 100' provided with the first step portion 110' and the second step portion 120' may be manufactured by injection molding. In this case, a position of the second step portion 120' to which the support member 500' is coupled may be formed at an appropriate position on the inner circumference of the inner container 100' depending on a height of an implant F to be stored.

Referring to FIG. 13, on the inner circumference of the inner container 100', the first step portion 110' may be located above the second step portion 120', and in this case, an inner diameter D1 of the first step portion 110' may be formed to be greater than an inner diameter D2 of the second step portion 120'. That is, when the dental implant packaging ampoule 1000 is assembled, the support member 500' may be inserted into the inner container 100' through an upper opening region of the inner container 100' and then may be seated on and coupled to the second step portion 120', and then the guide member 400 may be inserted into the inner container 100' through the upper opening region of the inner container 100' and then may be seated on and coupled to the first step portion 110'.

Meanwhile, the support member 500' may include a support portion 510' that supports a lower end of the implant F, and a seating portion 520' that is formed along an upper perimeter of the support portion 510' and is seated on and coupled to the second step portion 120' of the inner container 100'. The seating portion 520' of the support member 500' may be formed in a substantially circular shape.

Referring to FIGS. 12 and 14, one or more anti-separation protrusions 121' may be formed on the second step portion 120' of the inner container 100' to prevent the support member 500' from being separated, and one or more anti-separation grooves 521' into which the anti-separation protrusions 121' are inserted may be formed in the seating portion 520' of the support member 500'. The anti-separation protrusion 121' may be in the form of a protrusion projecting upward from the second step portion 120'.

Conversely, one or more anti-separation grooves may be formed on the second step portion 120' of the inner container 100' to prevent the support member 500' from being separated, and one or more anti-separation protrusions may be formed in the seating portion 520' of the support member 500' to be inserted into the anti-separation grooves.

According to the coupling structure of the second step portion 120' of the inner container 100' and the support member 500', the support member 500' may maintain a coupling position with the second step portion 120' without rotating even at a deep position in the inner container 100'.

In this way, since the first step portion 110' and the second step portion 120', to which the guide member 400 and the support member 500' are coupled to the inner circumference of the inner container 100', are formed integrally, there are effects of reducing the number of parts constituting the dental implant packaging ampoule 1000, improving production efficiency, and reducing manufacturing costs.

The above description of the present invention is for illustrative purposes only, and a person having ordinary skill in the art to which the present invention pertains will understand that the present invention can be easily modified into other specific forms without changing the technical idea or essential characteristics of the present invention. Therefore, it should be understood that the embodiments described above are exemplary in all respects and are not limiting. For example, each component described as a single entity may alternatively be implemented in a distributed manner, and likewise, components described as distributed may alternatively be implemented in a combined manner.

The scope of the present invention is defined by the claims set forth below, and all changes or modifications derived from the meaning and scope of the claims and their equivalents should be construed as being included within the scope of the present invention.

### Reference Signs List

1000 Dental implant packaging ampoule
100, 100' Inner container
110, 110' First step portion
120, 120' Second step portion
130, 130' Storage space
140, 140' Opening
150 Cut portion
160 Inner protrusion
200 Outer container
210 Male screw portion
300 Cap assembly
310 Ampoule cap
320 Inner cap
330 Cover cap
400 Guide member
500, 500' Support member
510, 510' Support portion
520, 520' Seating portion
F Implant
S Connecting groove
D1 Inner diameter of first step portion
D2 Inner diameter of second step portion

## Claims

1. A dental implant packaging ampoule (1000) comprising:
an inner container (100, 100') in which an implant is stored;
an outer container (200) in which the inner container (100, 100') is stored;
a cap assembly (300) that seals the outer container (200);
a guide member (400) provided on an inner circumference of the inner container (100, 100') to prevent separation of the implant in a horizontal direction; and
a support member (500, 500') provided on the inner circumference of the inner container (100, 100') to support a lower end of the implant,
wherein the inner circumference of the inner container (100, 100') is provided with a first step portion (110, 110') to which the guide member (400) is coupled and a second step portion (120, 120') to which the support member (500, 500') is coupled, and the first step portion (110, 110') and the second step portion (120, 120') are formed integrally with the inner container (100, 100').

2. The dental implant packaging ampoule (1000) of claim 1, wherein an inner diameter (D1) of the first step portion (110, 110') is greater than an inner diameter (D2) of the second step portion (120, 120').

3. The dental implant packaging ampoule (1000) of claim 1, wherein the support member (500, 500') includes:
a support portion (510, 510') supporting the lower end of the implant; and
a seating portion (520, 520') formed along an upper perimeter of the support portion and seated on and coupled to the second step portion (120, 120') of the inner container (100, 100').

4. The dental implant packaging ampoule (1000) of claim 3, wherein the seating portion (520, 520') of the support member (500, 500') is formed at least partially in an angular shape to prevent rotation while seated on the second step portion (120, 120').

5. The dental implant packaging ampoule (1000) of claim 1, wherein one or more inner protrusions (160) are formed on the inner circumference of the inner container (100, 100') to prevent upward separation of the support member (500, 500') seated on the second step portion (120, 120').

6. The dental implant packaging ampoule (1000) of claim 3, wherein one or more anti-separation protrusions are formed on the second step portion (120, 120') to prevent the support member (500, 500') from being separated, and
one or more anti-separation grooves into which the anti-separation protrusions are inserted are formed in the seating portion (520, 520') of the support member (500, 500').

7. The dental implant packaging ampoule (1000) of claim 3, wherein one or more anti-separation grooves are formed on the second step portion (120, 120') to prevent the support member (500, 500') from being separated, and
one or more anti-separation protrusions that are inserted into the anti-separation grooves are formed on the seating portion (520, 520') of the support member (500, 500').

8. The dental implant packaging ampoule (1000) of claim 1, wherein the cap assembly (300) includes:
an ampoule cap (310) that seals the outer container (200);
an inner cap (320) provided on a lower side of the ampoule cap (310) and connected to the inner container (100, 100'); and
a cover cap (330) provided on an upper side of the ampoule cap (310) and used to distinguish a diameter or height of the implant to be stored.

9. The dental implant packaging ampoule (1000) of claim 8, wherein a connecting protrusion connected to an upper end of the implant is provided at a center of the inner cap (320).

10. The dental implant packaging ampoule (1000) of claim 1, wherein a lower end of the inner container (100, 100') is directly supported on a bottom of the outer container (200).
